# FASCICULE DE BREVET EUROPEEN

(11) **EP 0 407 262 B1**
(45) Date de publication et mention de la délivrance du brevet: **25.05.1994**
(21) Numéro de dépôt: 90401818.1
(22) Date de dépôt: 26.06.1990
(51) Int. Cl.: C01B 33/193

(54) **Silice à porosité controlée et son procédé d'obtention**
Kieselsäure mit kontrollierter Porosität und Verfahren zu deren Herstellung
Silica of controlled porosity and process for obtaining it

(30) Priorité: 03.07.1989 FR 8908874
(43) Date de publication de la demande: 09.01.1991
(73) Titulaire: RHONE-POULENC CHIMIE, 92408 Courbevoie Cédex (FR)
(72) Inventeur: Persello, Jacques, F-01120 Montluel (FR)
(74) Mandataire: Dubruc, Philippe

(56) Documents cités:
- EP-A- 0 031 271
- US-A- 4 738 838

## Description

La présente invention a pour objet une silice à porosité contrôlée et son procédé de préparation.

La silice est utilisée actuellement dans certains domaines d'application en raison de ses caractéristiques de porosité, notamment dans le domaine de la catalyse, des encres et papier, dans l'industrie alimentaire, etc...

En catalyse, la silice est utilisée comme support catalytique ou comme couche poreuse revêtant les supports monolithiques.

En raison de ses qualités optiques de blancheur et d'opacité, la silice est utilisée comme charge de masse dans les papiers, en particulier les papiers journaux, comme charge de couchage pour les papiers couchés et les papiers spéciaux. Lors de l'utilisation de la silice dans le papier, une porosité plus grande est requise afin de faciliter l'absorption de l'encre.

Dans le domaine de l'alimentation en particulier animale, la silice est utilisée du fait de ses propriétés absorbantes comme support alimentaire en particulier support de méthionine, de vitamines notamment A, E, support de sucroglycérides, etc...

Il est donc demandé dans cette application ainsi que dans de nombreuses autres que la silice présente certaines caractéristiques de morphologie.

Le premier objectif de la présente invention est de fournir une silice présentant une porosité améliorée.

Le second objectif de l'invention est de disposer d'un procédé permettant d'obtenir une silice à porosité contrôlée.

Dans ce but, la silice précipitée de l'invention présente les caractéristiques suivantes :
- surface spécifique B.E.T. comprise entre 20 à 300 m²/g,
- surface spécifique C.T.A.B. comprise entre 10 et 200 m²/g,
- prise d'huile (DBP) comprise entre 80 et 400 cm³/100 g,
- volume poreux de 1 à 10 cm³/g
- diamètre moyen de pores variant entre 10 nm et 50 nm.

L'originalité de la silice de l'invention est qu'elle présente un volume poreux optimisé, c'est-à-dire des pores d'un diamètre situé entre 10 et 50 nm, quelle que soit la surface spécifique définie dans la gamme revendiquée, ce qui confère à ladite silice une surface d'adsorption et une capacité d'absorption maximales.

La silice de l'invention présente une surface spécifique BET comprise entre 20 et 300 m²/g, de préférence entre 60 et 200 m²/g.

La surface spécifique BET est déterminée selon la méthode de BRUNAUER-EMMETT-TELLER décrite dans the Journal of the American Chemical Society vol. 60, page 309, February 1938 et selon la norme NF X11-622 (3.3).

Pour ce qui est de la surface spécifique CTAB, elle varie habituellement entre 10 et 200 m²/g, plus particulièrement entre 60 et 200 m²/g.

La surface CTAB est la surface externe déterminée selon la norme ASTM D3765 mais en pratiquant l'adsorption de bromure d'hexadécyltriméthyl ammonium (CTAB) à pH 9 et en prenant comme aire projetée de la molécule de CTAB 35 Å².

La silice de l'invention peut présenter une prise d'huile comprise entre 80 et 400 cm³/100 g de silice, déterminée selon la norme NFT 30-022 (mars 1953) en mettant en oeuvre le phtalate de dibutyle. Plus précisément, la prise d'huile est comprise entre 100 et 350 cm³/100 g.

Pour ce qui est des caractéristiques de porosité de la silice de l'invention, elle présente un volume poreux variant entre 1 et 10 cm³/g et plus particulièrement entre 2 et 5 cm³/g.

Le diamètre moyen des pores s'échelonne dans une gamme relativement resserrée entre 10 nm et 50 nm, de préférence entre 20 nm et 30 nm.

La détermination du volume poreux inter-agrégat et la détermination de la population des pores correspondant à ce volume sont effectuées à l'aide d'un porosimètre à mercure (porosimètre utilisé : "pore sizer" 9300 de COULTRONICS). On fait pénétrer le mercure dans les pores de l'échantillon dégazé et on établit ainsi une courbe de porosité représentant l'évolution du volume des pores en fonction de la pression ou du rayon des pores. Cette courbe de porosité est établie selon la méthode exposée par N.M. WILNSLOW et J.J. SHAPIRO dans ASTM BULLETIN, page 39, Février 1959.

L'empilement des agrégats crée une porosité inter-agrégat dont le remplissage par le mercure va se traduire par l'apparition d'une marche sur la courbe de porosité. La hauteur de cette marche permet d'accéder au volume poreux inter-agrégat. L'inclinaison de la marche reflète la dispersion de la population des pores. La courbe dérivé présente un aspect de pic d'autant plus fin que la population des pores inter-agrégat est plus homogène.

On définira, ci-après, plus précisément les caractéristiques de surface spécifique et de porosité qui peuvent être modulées selon le procédé d'obtention.

En ce qui concerne la granulométrie de la silice, elle est adaptée en fonction de son application.

Le diamètre moyen des agglomérats peut varier largement entre 0,5 et 20 µm et, plus préférentiellement, entre 1 et 10 µm.

On définit le diamètre moyen comme un diamètre tel que 50 % en poids des agglomérats ont un diamètre supérieur ou inférieur au diamètre moyen. Ce diamètre moyen des agglomérats étant mesuré par COUNTER-COULTER.

Le pH de la silice de l'invention est généralement compris entre 4,0 et 8,0 et, plus particulièrement, entre 5,0 et 7,0. Ce pH est déterminé selon la norme NFT-45007 (5.5).

La silice de l'invention peut être préparée selon un procédé original qui consiste à ajouter simultanément un silicate et un acide dans une dispersion colloïdale de silice, ce qui conduit à une suspension de silice à abaisser le pH de telle sorte qu'il se situe entre 3 et 7 ; à séparer la silice et à la soumettre à un séchage.

Une variante préférentielle du procédé de l'invention réside dans l'addition supplémentaire d'un électrolyte dans la dispersion colloïdale initiale de silice.

Un mode de préparation de la dispersion colloïdale de silice ayant de préférence une concentration entre 1 et 150 g/l consiste à chauffer une solution aqueuse de silicate, par exemple entre 60°C et 95°C et à ajouter l'acide dans ladite solution aqueuse jusqu'à obtention d'un pH compris entre 8,0 et 10,0, de préférence aux environs de 9,5.

La concentration de la solution aqueuse de silicate exprimée en SiO₂ est de préférence comprise entre 20 et 150 g/l. On peut faire appel à un acide dilué ou concentré : sa normalité pouvant varier entre 0,5 N et 36 N, de préférence entre 1 et 2 N.

Dans ce qui précède, on entend par silicate avantageusement un silicate de métal alcalin et, de préférence, un silicate de sodium de rapport pondéral SiO₂/Na₂O compris entre 2 et 4, de préférence égal à 3,5. Pour ce qui est de l'acide, il peut être gazeux, comme le gaz carbonique ou liquide, de préférence, l'acide sulfurique.

Selon une variante d'exécution de l'invention, il est possible de limiter le nombre de colloïdes dans la dispersion colloïdale par ajout d'un électrolyte. Généralement, on fait appel à un sel minéral ou organique, de préférence, de métal alcalin ou d'ammonium. A titre d'exemples, on peut citer le sulfate de sodium, le chlorure de sodium, l'acétate de sodium, le sulfate d'ammonium, le chlorure d'ammonium, etc...

Ledit électrolyte peut être mis en oeuvre sous forme solide ou sous forme d'une solution aqueuse dont la concentration peut varier avantageusement entre 0 et 50 g par litre de dispersion colloïdale.

Conformément au procédé de l'invention, on ajoute simultanément dans la dispersion colloïdale de silice comprenant éventuellement un électrolyte, un silicate et un acide.

L'addition des deux réactifs se fait de manière simultanée de telle sorte que le pH soit maintenu constant entre 8 et 10, de préférence entre 8,5 et 9,5. La température est avantageusement comprise entre 60°C et 95°C.

La concentration de la solution de silicate exprimée en SiO₂ peut être comprise entre 40 et 250 g par litre de dispersion colloïdale de silice, plus particulièrement entre 80 et 150 g par litre.

Dans l'étape suivante du procédé de l'invention, on amène le pH entre 3,0 et 7,0.

A cet effet, on amène le pH au pH souhaité par ajout d'acide.

On peut faire appel, par exemple, à un acide minéral tel que l'acide nitrique, chlorohydrique, sulfurique, phosphorique ou bien à l'acide carbonique formé par barbotage de gaz carbonique.

On obtient alors une suspension de silice ayant une concentration exprimée en SiO₂, de préférence comprise entre 40 et 80 g/l.

Le volume représenté par la dispersion colloïdale de silice mise en oeuvre initialement, représente de préférence entre 10 et 20 % du volume de la suspension finale obtenue et se situe, plus préférentiellement, aux environs de 15 %.

On procède alors à la séparation de la silice du milieu réactionnel selon tout moyen connu, filtre sous vide ou filtre presse par exemple.

On recueille ainsi un gâteau de silice.

On peut, selon un mode préféré de réalisation de l'invention, effectuer un lavage du gâteau de silice.
A cet effet, on peut envisager de faire un lavage à l'eau, généralement désionisée et/ou un lavage à l'aide d'une solution acide ayant un pH compris entre 2 et 7.

Cette solution acide peut être par exemple une solution d'un acide minéral tel que l'acide nitrique.
Toutefois, selon un mode de réalisation particulier de l'invention, cette solution acide peut aussi être une solution d'un acide organique, notamment d'un acide organique complexant. Cet acide pourra être choisi dans le groupe des acides carboxyliques, dicarboxyliques, hydroxycarboxyliques et amino-carboxyliques.
On peut citer comme exemple de tels acides l'acide acétique et pour les acides complexants, l'acide tartrique, l'acide maléique, l'acide glycérique, l'acide gluconique, l'acide citrique.

D'un point de vue pratique, les opérations de lavage peuvent se faire par passage de la solution de lavage sur le gâteau ou par introduction de celle-ci dans la suspension obtenue, après délitage du gâteau.
En effet, le gâteau de filtration est soumis avant l'opération de séchage à un délitage qui peut être effectué par tout moyen connu, par exemple, à l'aide d'un agitateur tournant à grande vitesse.

Le gâteau de silice, avant ou après lavage, est donc délité puis séché selon tout moyen connu. Le séchage peut se faire par exemple dans un four tunnel ou à moufle ou par atomisation dans un courant d'air chaud dont la température d'entrée peut varier entre 200°C et 500°C environ et la température de sortie entre 80°C et 100°C environ : le temps de séjour étant compris entre 10 secondes et 5 minutes.

Le produit séché peut être broyé si nécessaire pour obtenir la granulométrie désirée. Cette dernière est conditionnée par l'application envisagée. Généralement, on conduit l'opération de telle sorte que le diamètre moyen des agglomérats soit compris entre 0,05 et 20 µm, de préférence entre 1 et 10 µm. Dans le cas de l'application de la silice dans le domaine du papier, la granulométrie est avantageusement comprise entre 1 et 3 µm.
L'opération est conduite dans un appareillage classique : broyeur à couteaux ou broyeur à jet d'air.

La mise en oeuvre du procédé de l'invention conduit à une silice présentant certaines caractéristiques de morphologie telles que précédemment décrites.

Une des caractéristiques du procédé de l'invention est de permettre de contrôler la morphologie de la silice obtenue, en particulier sa surface spécifique.

En effet, il a été trouvé que les caractéristiques finales de la silice obtenue pouvaient être corrélées et par la même choisies, en fonction du nombre et de la taille des colloïdes présents dans la dispersion colloïdale de silice initiale.

Or, il a également été trouvé que le nombre et la taille des colloïdes de ladite dispersion pouvaient être contrôlés par le choix de la concentration de la silice dans la dispersion colloïdale de silice, par la présence ou non d'un électrolyte et par le choix de sa concentration.

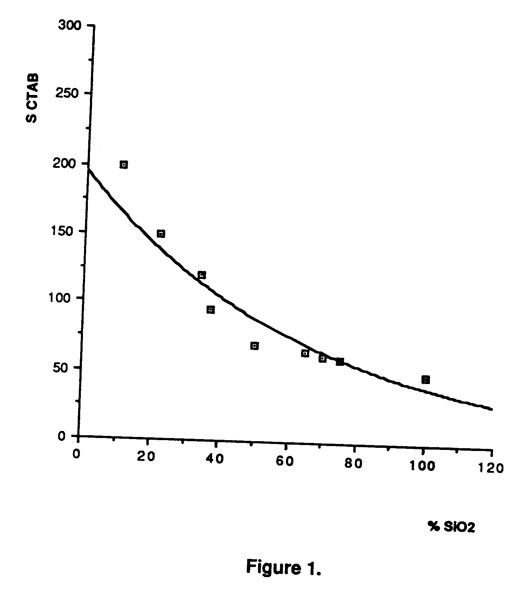

La figure 1 représente un graphe sur lequel est portée la courbe (A) de variation de la surface spécifique CTAB (exprimée en m²/g) de la silice obtenue, en fonction de la concentration exprimée en gramme par litre, en silice de la dispersion colloïdale de silice, et en l'absence de tout électrolyte.

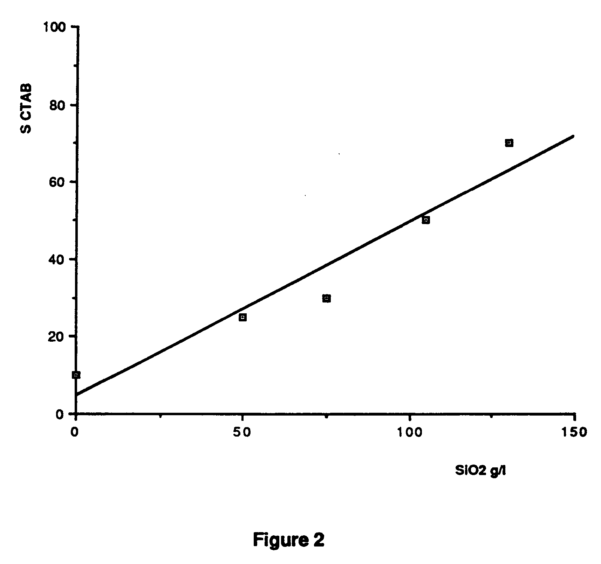

La figure 2 représente un graphe sur lequel est portée la courbe (B) de variation de la surface spécifique CTAB en fonction de la concentration en silice et en présence d'un électrolyte, à savoir le sulfate de sodium (à raison de 20 g/l).

A partir des courbes 1 et 2, l'homme de métier peut aisément déterminer les conditions opératoires permettant d'obtenir les caractéristiques de surface spécifique souhaitée.

Si une faible surface spécifique est souhaitée, c'est-à-dire inférieure à environ 80 m²/g, il y a lieu d'opter pour la mise en oeuvre d'un électrolyte, lors de la préparation de la dispersion colloïdale de silice.

Si une grande surface spécifique est désirée de préférence supérieure à 150 m²/g, il convient de choisir une faible concentration de silice, dans la dispersion colloïdale de silice, de préférence inférieure à 50 g/l.

Une autre caractéristique du procédé de l'invention est qu'il conduit à une taille de pores inter-agrégats relativement constante, dans une large gamme de surface spécifique, ce qui est mis en évidence par les exemples de l'invention.

En raison de ses propriétés intéressantes de morphologie, la silice de l'invention peut être donc utilisée dans de nombreux domaines d'application notamment catalyse, papier, support alimentaire, etc...

On donne, ci-après, des exemples de réalisation de l'invention qui sont fournis à titre illustratif et sans aucun caractère limitatif.

### Exemple 1

### Synthèse d'une silice ayant une surface spécifique CTAB de 150 m²/g

Dans un réacteur équipé d'un système de régulation de température et de pH et d'un système d'agitation par turbine, on introduit 5 litres d'eau désionisée et 1 litre d'une solution aqueuse de silicate de sodium à 130 g/l.

Après la mise en marche de l'agitation (350 tours/minute), le pied de cuve ainsi constitué est chauffé à 85°C et le pH est amené à 9,5, en 8 minutes, par ajout d'une solution aqueuse d'acide sulfurique à 80 g/l.

Lorsque la température de 85°C est atteinte, on procède à l'addition simultanée de 10 litres d'une solution aqueuse de silicate de sodium de concentration en silice de 130 g/l, de rapport SiO₂/Na₂O égal à 3,5, à un débit de 0,20 litre/mn, et de 7,0 litres d'une solution aqueuse d'acide sulfurique à 80 g/l. Le débit d'acide est ajusté de manière à maintenir le pH du milieu à une valeur constante de 9,2 (débit moyen : 0,14 litre/minute).

Après 50 mn d'addition, on arrête l'addition de silicate et on continue l'addition d'acide jusqu'à stabiliser le pH du mélange réactionnel à 5,0.

Le mélange est ensuite filtré et le gâteau humide est lavé à l'eau désionisée jusqu'à ce que la conductivité du filtrat soit inférieure à 1 millisiemens.

Le gâteau obtenu est séché par atomisation et broyé sur un broyeur de type "Jet Pulveriser" pour obtenir une granulométrie de 2 microns.

Les caractéristiques physico-chimiques de la silice ainsi obtenue sont les suivantes :
- Surface BET 200 m²/g
- Surface CTAB 150 m²/g
- Prise d'huile 320 cm³/100 g
- pH à 5 % dans l'eau 7,0
- % Sulfate 0,5
- Humidité 105°C (%) 5,9
- Perte au Feu 1000°C (%) 9,1
- Perte à 105°C du gâteau (%) 80
- Volume poreux total 3,6 cm³/g
- Diamètre moyen des pores 35 nm

### Exemple 2

### Synthèse d'une silice ayant une surface spécifique CTAB de 120 m²/g

Dans un réacteur équipé d'un système de régulation de température et de pH et d'un système d'agitation par turbine, on introduit 4,4 litres d'eau désionisée et 1,6 litre d'une solution aqueuse de silicate de sodium à 130 g/l.

Après la mise en marche de l'agitation (350 tours/minute), le pied de cuve ainsi constitué est chauffé à 92°C et le pH est amené à 9,5, en 8 minutes, par ajout d'une solution aqueuse d'acide sulfurique à 80 g/l.

Lorsque la température de 92°C est atteinte, on procède à l'addition simultanée de 12 litres d'une solution aqueuse de silicate de sodium de concentration en silice de 130 g/l, de rapport SiO₂/Na₂O égal à 3,5, à un débit de 0,20 litre/mn, et de 7,2 litres d'une solution aqueuse d'acide sulfurique à 80 g/l. Le débit d'acide est ajusté de manière à maintenir le pH du milieu à une valeur constante de 9,5 (débit moyen : 0,120 litre/minute).

Après 60 mn d'addition, on arrête l'addition de silicate et on continue l'addition d'acide jusqu'à stabiliser le pH du mélange réactionnel à 5,0.

Le mélange est ensuite filtré et le gâteau humide est lavé à l'eau désionisée jusqu'à ce que la conductivité du filtrat soit inférieure à 1 millisiemens.

Le gâteau obtenu est séché par atomisation et broyé sur un broyeur de type "Jet Pulveriser" pour obtenir une granulométrie de 2 microns.

Les caractéristiques physico-chimiques de la silice ainsi obtenue sont les suivantes :
- Surface BET 150 m²/g
- Surface CTAB 120 m²/g
- Prise d'huile 200 cm³/100 g
- pH à 5 % dans l'eau 4,0
- % Sulfate 2,5
- Humidité 105°C (%) 4,0
- Perte au Feu 1000°C (%) 9,0
- Perte à 105°C du gâteau (%) 80
- Volume poreux total 3,3 cm³/g
- Diamètre moyen des pores 35 nm

### Exemple 3

### Synthèse d'une silice ayant une surface spécifique CTAB de 60 m²/g

Dans un réacteur équipé d'un système de régulation de température et de pH et d'un système d'agitation par turbine, on introduit 2,5 litres d'eau désionisée et 2,5 litres d'une solution aqueuse de silicate de sodium à 130 g/l.

Après la mise en marche de l'agitation (350 tours/minute), le pied de cuve ainsi constitué est chauffé à 90°C et le pH est amené à 9,5, en 8 minutes, par ajout d'une solution aqueuse d'acide sulfurique à 80 g/l.

Lorsque la température de 90°C est atteinte, on procède à l'addition simultanée de 15 litres d'une solution aqueuse de silicate de sodium de concentration en silice de 130 g/l, de rapport SiO₂/Na₂O égal à 3,5, à un débit de 0,25 litre/mn, et de 9,0 litres d'une solution aqueuse d'acide sulfurique à 80 g/l. Le débit d'acide est ajusté de manière à maintenir le pH du milieu à une valeur constante de 9,5 (débit moyen : 0,15 litre/minute).

Après 60 mn d'addition, on arrête l'addition de silicate et on continue l'addition d'acide jusqu'à stabiliser le pH du mélange réactionnel à 5,0.

Le mélange est ensuite filtré et le gâteau humide est lavé à l'eau désionisée jusqu'à ce que la conductivité du filtrat soit inférieure à 1 millisiemens.

Le gâteau obtenu est séché par atomisation et broyé sur un broyeur de type "Jet Pulveriser" pour obtenir une granulométrie de 2 microns.

Les caractéristiques physico-chimiques de la silice ainsi obtenue sont les suivantes :
- Surface BET 80 m²/g
- Surface CTAB 60 m²/g
- Prise d'huile 120 cm³/100 g
- pH à 5 % dans l'eau 4,0
- % Sulfate 2,5
- Humidité 105°C (%) 4,0
- Perte au Feu 1000°C (%) 8,0
- Perte à 105°C du gâteau (%) 80
- Volume poreux total 3,3 cm³/g
- Diamètre moyen des pores 40 nm

### Exemple 4

### Synthèse d'une silice ayant une surface spécifique CTAB de 30 m²/g

Dans un réacteur équipé d'un système de régulation de température et de pH et d'un système d'agitation par turbine, on introduit 4 litres d'une solution aqueuse de silicate de sodium à 75 g/l et 80 g d'une solution aqueuse de sulfate de sodium.

Après la mise en marche de l'agitation (350 tours/minute), le pied de cuve ainsi constitué est chauffé à 90°C.

Le pH du pied de cuve est amené à 9,0 par addition d'acide sulfurique à 80 g/l avec un débit constant de 0,058 l/mn.

On procède par la suite à l'addition simultanée de 14,4 l de silicate de sodium de concentration en silice de 130 g/l, de rapport SiO₂/Na₂O égal à 3,5 et de débit 0,240 l/mn et de 9,42 l d'acide sulfurique de concentration 80 g/l. Le débit d'acide est ajusté de manière à maintenir le pH du milieu à une valeur constante de 9,2 (débit moyen = 0,16 l/mn).
En fin d'addition simultanée, on arrête l'addition de silicate et on continue l'addition d'acide avec un débit constant de 0,073 l/mn jusqu'à stabiliser le pH du mélange réactionnel à 4,2.
Le mélange est ensuite filtré et le gâteau humide est lavé à l'eau désionisée jusqu'à ce que la conductivité du filtrat soit inférieure à 1 millisiemens.

Le gâteau obtenu est séché par atomisation et broyé sur un broyeur de type "Jet Pulveriser" pour obtenir une granulométrie de 5 microns.

Les caractéristiques physico-chimiques de la silice ainsi obtenue sont les suivantes :
- Surface BET 50 m²/g
- Surface CTAB 30 m²/g
- Prise d'huile 90 cm³/100 g
- pH à 5 % dans l'eau 5,0
- Volume poreux total 1,25 cm³/g
- Diamètre moyen des pores 50 nm

### Exemple 5

### Synthèse d'une silice ayant une surface spécifique CTAB de 50 m²/g

Dans un réacteur équipé d'un système de régulation de température et de pH et d'un système d'agitation par turbine, on introduit 4 litres d'une solution aqueuse de silicate de sodium à 105 g/l et 80 g d'une solution aqueuse de sulfate de sodium.

Après la mise en marche de l'agitation (350 tours/minute), le pied de cuve ainsi constitué est chauffé à 90°C.

Le pH du pied de cuve est amené à 9,0 par addition d'acide sulfurique à 80 g/l avec un débit constant de 0,138 l/mn.

On procède par la suite à l'addition simultanée de 14,09 l de silicate de sodium de concentration en silice de 130 g/l, de rapport SiO₂/Na₂O égal à 3,5 et de débit 0,235 l/mn et de 8,28 l d'acide sulfurique de concentration 80 g/l. Le débit d'acide est ajusté de manière à maintenir le pH du milieu à une valeur constante de 9,2 (débit moyen = 0,14 l/mn).
En fin d'addition simultanée, on arrête l'addition de silicate et on continue l'addition d'acide avec un débit constant de 0,075 l/mn jusqu'à stabiliser le pH du mélange réactionnel à 4,2.
Le mélange est ensuite filtré et le gâteau humide est lavé à l'eau désionisée jusqu'à ce que la conductivité du filtrat soit inférieure à 1 millisiemens.

Le gâteau obtenu est séché par atomisation et broyé sur un broyeur de type "Jet Pulveriser" pour obtenir une granulométrie de 5 microns.

Les caractéristiques physico-chimiques de la silice ainsi obtenue sont les suivantes :
- Surface BET 60 m²/g
- Surface CTAB 50 m²/g
- Prise d'huile 100 cm³/100 g
- pH à 5 % dans l'eau 5,0
- Volume poreux total 1,65 cm³/g
- Diamètre moyen des pores 50 nm

### Exemple 6

### Synthèse d'une silice ayant une surface spécifique CTAB de 100 m²/g

Dans un réacteur équipé d'un système de régulation de température et de pH et d'un système d'agitation par turbine, on introduit 4 litres d'une solution aqueuse de silicate de sodium à 130 g/l et 80 g d'une solution aqueuse de sulfate de sodium.

Après la mise en marche de l'agitation (350 tours/minute), le pied de cuve ainsi constitué est chauffé à 90°C.

Le pH du pied de cuve est amené à 9,7 par addition d'acide sulfurique à 80 g/l avec un débit constant de 0,045 l/mn.

On procède par la suite à l'addition simultanée de 13,64 l de silicate de sodium de concentration en silice de 130 g/l, de rapport SiO₂/Na₂O égal à 3,5 et de débit 0,227 l/mn et de 5,2 l d'acide sulfurique de concentration 80 g/l. Le débit d'acide est ajusté de manière à maintenir le pH du milieu à une valeur constante de 9,5 (débit moyen 0,157 l/mn).
En fin d'addition simultanée, on arrête l'addition de silicate et on continue l'addition d'acide avec un débit constant de 0,073 l/mn jusqu 'à stabiliser le pH du mélange réactionnel à 4,2.
Le mélange est ensuite filtré et le gâteau humide est lavé à l'eau désionisée jusqu'à ce que la conductivité du filtrat soit inférieure à 1 millisiemens.

Le gâteau obtenu est séché par atomisation et broyé sur un broyeur de type "Jet Pulveriser" pour obtenir une granulométrie de 5 microns.

Les caractéristiques physico-chimiques de la silice ainsi obtenue sont les suivantes :
- Surface BET 150 m²/g
- Surface CTAB 100 m²/g
- Prise d'huile 150 cm³/100 g
- pH à 5 % dans l'eau 5,0
- Volume poreux total 2,5 cm³/g
- Diamètre moyen des pores 45 nm

## Revendications (Revendications pour l'(les) Etat(s) contractant(s) suivant(s): AT, BE, CH, DE, DK, FR, GB, GR, IT, LI, LU, NL, SE)

1. Silice précipitée présentant les caractéristiques suivantes:
- surface spécifique B.E.T. comprise entre 20 et 300 m²/g,
- surface spécifique C.T.A.B. comprise entre 10 et 200 m²/g,
- prise d'huile (DBP) comprise entre 80 et 400 cm³/100g,
- volume poreux de 1 à 10 cm³/g,
- diamètre moyen de pores variant entre 10 nm et 50 nm.

2. Silice selon la revendication 1 caractérisée par le fait que sa surface spécifique BET est comprise entre 60 et 200 m²/g.

3. Silice selon l'une des revendications 1 et 2 caractérisée par le fait que sa surface spécifique CTAB est comprise entre 60 et 200 m²/g.

4. Silice selon l'une des revendications 1 à 3 caractérisée par le fait que sa prise d'huile est comprise entre 100 et 350 cm³/100g.

5. Silice selon l'une des revendications 1 à 3 caractérisée par le fait que son volume poreux est compris entre 2 et 5 cm³/g.

6. Silice selon l'une des revendications 1 à 5 caractérisée par le fait que le diamètre moyen des pores est compris entre 20 nm et 30 nm.

7. Silice selon l'une des revendications 1 à 5 caractérisée par le fait que le diamètre moyen des agglomérats varie entre 0,5 et 20 µm et, plus particulièrement, entre 1 et 10 µm.

8. Silice selon l'une des revendications 1 à 7 caractérisée par le fait que son pH est compris entre 4,0 et 8,0, plus particulièrement entre 5,0 et 7,0.

9. Procédé de préparation de la silice décrite dans l'une des revendications 1 à 8 caractérisé par le fait qu'il consiste à ajouter simultanément un silicate et un acide dans une dispersion colloidale de silice, ce qui conduit à une suspension de silice ; à abaisser le pH de telle sorte qu'il se situe entre 3 et 7 à séparer la silice et à la soumettre à un séchage.

10. Procédé selon la revendication 9 caractérisé par le fait qu'il consiste à ajouter, en outre, un électrolyte dans la dispersion colloidale de silice.

11. Procédé selon la revendication 9 caractérisé par le fait que l'électrolyte est un sel minéral ou organique.

12. Procédé selon la revendication 11 caractérisé par le fait que l'électrolyte est un sel minéral ou organique d'un métal alcalin, tout particulièrement de sodium ou bien d'ammonium.

13. Procédé selon la revendication 9 caractérisé par le fait que l'addition des deux réactifs se fait de manière simultanée, de telle sorte que le pH soit maintenu constant entre 8 et 10, de préférence entre 8,5 et 9,5.

14. Procédé selon la revendication 9 caractérisé par le fait que la température du mélange réactionnel est comprise entre 60 °C et 95 °C.

15. Procédé selon la revendication 9 caractérisé par le fait que l'on prépare la dispersion colloidale de silice contenant de 1 à 150 g/l de silice en chauffant une solution aqueuse de silicate entre 60 °C et 95 °C et en ajoutant l'acide dans ladite solution aqueuse jusqu'à l'obtention d'un pH compris entre 8,0 et 10,0, de préférence égal à 9,5.

16. Procédé selon la revendication 9 caractérisé par le fait que la concentration de la solution de silicate exprimée en silice varie entre 40 et 250 g par litre de dispersion colloidale de silice, plus particulièrement entre 80 et 150 g par litre.

17. Procédé selon la revendication 10 caractérisé par le fait que la concentration de l'électrolyte varie de 0 à 50 g par litre de dispersion.

18. Procédé selon la revendication 9 caractérisé par le fait que le volume représenté par la dispersion colloidale de silice représente de 10 à 20 % du volume de la suspension finale obtenue, plus particulièrement aux environs de 15 %.

19. Procédé selon la revendication 9 caractérisé par le fait que l'on effectue après séparation un lavage à l'eau ou à l'aide d'une solution acide.

## Revendications (Revendications pour l'(les) Etat(s) contractant(s) suivant(s): ES)

1. Procédé de préparation d'une silice précipitée présentant les caractéristiques suivantes
- surface spécifique B.E.T. comprise entre 20 et 300 m²/g,
- surface spécifique C.T.A.B. comprise entre 10 et 200 m²/g,
- prise d'huile (DBP) comprise entre 80 et 400 cm³/100g,
- volume poreux de 1 à 10 cm³/g,
- diamètre moyen de pores variant entre 10 nm et 50 nm,
caractérisé par le fait qu'il consiste à ajouter simultanément un silicate et un acide dans une dispersion colloidale de silice, ce qui conduit à une suspension de silice ; à abaisser le pH de telle sorte qu'il se situe entre 3 et 7; à séparer la silice et à la soumettre à un séchage.

2. Procédé selon la revendication 1 caractérisé par le fait que ladite surface spécifique BET est comprise entre 60 et 200 m²/g.

3. Procédé selon l'une des revendications 1 et 2 caractérisé par le fait que ladite surface spécifique CTAB est comprise entre 60 et 200 m²/g.

4. Procédé selon l'une des revendications 1 à 3 caractérisé par le fait que ladite prise d'huile est comprise entre 100 et 350 cm³/100g.

5. Procédé selon l'une des revendications 1 à 3 caractérisé par le fait que ledit volume poreux est compris entre 2 et 5 cm³/g.

6. Procédé selon l'une des revendications 1 à 5 caractérisé par le fait que ledit diamètre moyen des pores est compris entre 20 nm et 30 nm.

7. Procédé selon l'une des revendications 1 à 5 caractérisé par le fait que le diamètre moyen des agglomérats de ladite silice précipitée varie entre 0,5 et 20 µm et, plus particulièrement, entre 1 et 10 µm.

8. Procédé selon l'une des revendications 1 à 7 caractérisé par le fait que le pH de ladite silice précipitée est compris entre 4,0 et 8,0, plus particulièrement entre 5,0 et 7,0.

9. Procédé selon l'une des revendications 1 à 8 caractérisé par le fait qu'il consiste à ajouter, en outre, un électrolyte dans la dispersion colloidale de silice.

10. Procédé selon l'une des revendications 1 à 8 caractérisé par le fait que l'électrolyte est un sel minéral ou organique.

11. Procédé selon la revendication 10 caractérisé par le fait que l'électrolyte est un sel minéral ou organique d'un métal alcalin, tout particulièrement de sodium ou bien d'ammonium.

12. Procédé selon l'une des revendications 1 à 8 caractérisé par le fait que l'addition des deux réactifs se fait de manière simultanée, de telle sorte que le pH soit maintenu constant entre 8 et 10, de préférence entre 8,5 et 9,5.

13. Procédé selon l'une des revendications 1 à 8 caractérisé par le fait que la température du mélange réactionnel est comprise entre 60 °C et 95 °C.

14. Procédé selon l'une des revendications 1 à 8 caractérisé par le fait que l'on prépare la dispersion colloidale de silice contenant de 1 à 150 g/l de silice en chauffant une solution aqueuse de silicate entre 60 °C et 95 °C et en ajoutant l'acide dans ladite solution aqueuse jusqu'à l'obtention d'un pH compris entre 8,0 et 10,0, de préférence égal à 9,5.

15. Procédé selon l'une des revendications 1 à 8 caractérisé par le fait que la concentration de la solution de silicate exprimée en silice varie entre 40 et 250 g par litre de dispersion colloidale de silice, plus particulièrement entre 80 et 150 g par litre.

16. Procédé selon la revendication 9 caractérisé par le fait que la concentration de l'électrolyte varie de 0 à 50 g par litre de dispersion.

17. Procédé selon l'une des revendications 1 à 8 caractérisé par le fait que le volume représenté par la dispersion colloidale de silice représente de 10 à 20 % du volume de la suspension finale obtenue, plus particulièrement aux environs de 15 %.

18. Procédé selon l'une des revendications 1 à 8 caractérisé par le fait que l'on effectue après séparation un lavage à l'eau ou à l'aide d'une solution acide.

## Patentansprüche (Patentansprüche für folgende(n) Vertragsstaat(en): AT, BE, CH, DE, DK, FR, GB, GR, IT, LI, LU, NL, SE)

1. Gefälltes Siliciumdioxid, das die folgenden charakteristischen Eigenschaften zeigt:
- spezifische Oberfläche, gemessen nach BET, zwischen 20 und 300 m²/g einschließlich;
- spezifische Oberfläche, gemessen nach CTAB, zwischen 10 und 200 m²/g einschließlich;
- Ölaufnahmevermögen (DBP) zwischen 80 und 400 cm³/100 g einschließlich;
- Porenvolumen von 1 bis 10 cm³/g; und
- mittlerer Porendurchmesser mit einer Schwankung zwischen 10 nm und 50 nm.

2. Siliciumdioxid nach Anspruch 1, dadurch gekennzeichnet, daß die spezifische Oberfläche, gemessen nach BET, zwischen 60 und 200 m²/g einschließlich liegt.

3. Siliciumdioxid nach einem der Ansprüche 1 und 2, dadurch gekennzeichnet, daß seine spezifische Oberfläche, gemessen nach CTAB, zwischen 60 und 200 m²/g liegt.

4. Siliciumdioxid nach einem der Ansprüche 1 bis 3, dadurch gekennzeichnet, daß sein Ölaufnahmevermögen zwischen 100 und 350 cm³/100 g liegt.

5. Siliciumdioxid nach einem der Ansprüche 1 bis 3, dadurch gekennzeichnet, daß sein Porenvolumen zwischen 2 und 5 cm³/g einschließlich liegt.

6. Siliciumdioxid nach einem der Ansprüche 1 bis 5, dadurch gekennzeichnet, daß der mittlere Durchmesser der Poren zwischen 20 nm und 30 nm einschließlich liegt.

7. Siliciumdioxid nach einem der Ansprüche 1 bis 5, dadurch gekennzeichnet, daß der mittlere Durchmesser der Agglomeratteilchen zwischen 0,5 und 20 µm und ganz besonders zwischen 1 und 10 µm schwankt.

8. Siliciumdioxid nach einem der Ansprüche 1 bis 7, dadurch gekennzeichnet, daß sein pH-Wert zwischen 4,0 und 8,0, ganz besonders zwischen 5,0 und 7,0 liegt.

9. Verfahren zur Herstellung von Siliciumdioxid, wie es in einem der Ansprüche 1 bis 8 beschrieben ist, dadurch gekennzeichnet, daß es darin besteht, daß man gleichzeitig ein Silicat und eine Säure in eine kolloidale Dispersion von Siliciumdioxid gibt, was zu einer Siliciumdioxid-Suspension führt, den pH-Wert in der Weise absenkt, daß er zwischen 3 und 7 liegt, und das Siliciumdioxid abtrennt und es einem Trockenschritt unterwirft.

10. Verfahren nach Anspruch 9, dadurch gekennzeichnet, daß es darin besteht, daß man außerdem der kolloidalen Dispersion von Siliciumdioxid einen Elektrolyten zusetzt.

11. Verfahren nach Anspruch 9, dadurch gekennzeichnet, daß der Elektrolyt ein Mineralsalz oder organisches Salz ist.

12. Verfahren nach Anspruch 11, dadurch gekennzeichnet, daß der Elektrolyt ein Mineralsalz oder ein organisches Salz eines Alkalimetallsalzes ist, ganz besonders ein Salz des Natriums, oder ein Ammoniumsalz.

13. Verfahren nach Anspruch 9, dadurch gekennzeichnet, daß die Zugabe der beiden Reaktanden in gleichzeitiger Weise derart abläuft, daß der pH-Wert bei einem konstanten Wert zwischen 8 und 10 gehalten wird, vorzugsweise zwischen 8,5 und 9,5.

14. Verfahren nach Anspruch 9, dadurch gekennzeichnet, daß die Temperatur der Reaktionsmischung zwischen 60 °C und 95 °C einschließlich liegt.

15. Verfahren nach Anspruch 9, dadurch gekennzeichnet, daß man die kolloidale Siliciumdioxid-Dispersion, die von 1 bis 150 g/l Siliciumdioxid enthält, in der Weise herstellt, daß man eine wäßrige Silicatlösung auf einen Wert zwischen 60 und 95 °C erwärmt und die Säure der wäßrigen Lösung zum Erhalt eines pH-Werts zusetzt, der zwischen 8,0 und 10,0 liegt, vorzugsweise gleich 9,5 ist.

16. Verfahren nach Anspruch 9, dadurch gekennzeichnet, daß die Konzentration der Silicatlösung, ausgedrückt als Siliciumdioxid, zwischen 40 und 250 g/l der kolloidalen Siliciumdioxid-Dispersion schwankt, ganz besonders zwischen 80 und 150 g/l.

17. Verfahren nach Anspruch 10, dadurch gekennzeichnet, daß die Konzentration des Elektrolyten von 0 bis 50 g/l der Dispersion schwankt.

18. Verfahren nach Anspruch 9, dadurch gekennzeichnet, daß das Volumen, das durch die kolloidale Dispersion von Siliciumdioxid wiedergegeben wird, 10 bis 20 % des Volumens der erhaltenen Suspension darstellt, ganz besonders etwa 15 %.

19. Verfahren nach Anspruch 9, dadurch gekennzeichnet, daß man nach der Trennung einen Waschschritt mit Wasser oder mit einer sauren Lösung durchführt.

## Patentansprüche (Patentansprüche für folgende(n) Vertragsstaat(en): ES)

1. Verfahren zur Herstellung eines gefällten Siliciumdioxids, das die folgenden charakteristischen Eigenschaften zeigt:
- spezifische Oberfläche, gemessen nach BET, zwischen 20 und 300 m²/g einschließlich;
- spezifische Oberfläche, gemessen nach CTAB, zwischen 10 und 200 m²/g einschließlich;
- Ölaufnahmevermögen (DBP) zwischen 80 und 400 cm³/100 g einschließlich;
- Porenvolumen von 1 bis 10 cm³/g; und
- mittlerer Porendurchmesser mit einer Schwankung zwischen 10 nm und 50 nm,
dadurch gekennzeichnet, daß es darin besteht, daß man gleichzeitig ein Silicat und eine Säure in eine kolloidale Dispersion von Siliciumdioxid gibt, was zu einer Siliciumdioxid-Suspension führt, den pH-Wert in der Weise absenkt, daß er zwischen 3 und 7 liegt, und das Siliciumdioxid abtrennt und es einem Trockenschritt unterwirft.

2. Verfahren nach Anspruch 1, dadurch gekennzeichnet, daß die spezifische Oberfläche, gemessen nach BET, zwischen 60 und 200 m²/g einschließlich liegt.

3. Verfahren nach einem der Ansprüche 1 und 2, dadurch gekennzeichnet, daß die spezifische Oberfläche, gemessen nach CTAB, zwischen 60 und 200 m²/g einschließlich liegt.

4. Verfahren nach einem der Ansprüche 1 bis 3, dadurch gekennzeichnet, daß das Ölaufnahmevermögen zwischen 100 und 350 cm³/100 g liegt.

5. Verfahren nach einem der Ansprüche 1 bis 3, dadurch gekennzeichnet, daß das Porenvolumen zwischen 2 und 5 cm³/g einschließlich liegt.

6. Verfahren nach einem der Ansprüche 1 bis 5, dadurch gekennzeichnet, daß der mittlere Durchmesser der Poren zwischen 20 nm und 30 nm einschließlich liegt.

7. Verfahren nach einem der Ansprüche 1 bis 5, dadurch gekennzeichnet, daß der mittlere Durchmesser der Agglomeratteilchen des gefällten Siliciumdioxids zwischen 0,5 und 20 µm und ganz besonders zwischen 1 und 10 µm schwankt.

8. Verfahren nach einem der Ansprüche 1 bis 7, dadurch gekennzeichnet, daß der pH-Wert des gefällten Siliciumdioxids zwischen 4,0 und 8,0 einschließlich liegt, ganz besonders zwischen 5,0 und 7,0 .

9. Verfahren nach einem der Ansprüche 1 bis 8, dadurch gekennzeichnet, daß es darin besteht, daß man außerdem der kolloidalen Siliciumdioxid-Dispersion einen Elektrolyten zusetzt.

10. Verfahren nach einem der Ansprüche 1 bis 8, dadurch gekennzeichnet, daß der Elektrolyt ein Mineralsalz oder ein organisches Salz ist.

11. Verfahren nach Anspruch 10, dadurch gekennzeichnet, daß der Elektrolyt ein Mineralsalz oder ein organisches Salz eines Alkalimetallsalzes ist, ganz besonders ein Salz des Natriums, oder ein Ammoniumsalz.

12. Verfahren nach einem der Ansprüche 1 bis 8, dadurch gekennzeichnet, daß die Zugabe der beiden Reaktanden in gleichzeitiger Weise derart abläuft, daß der pH-Wert bei einem konstanten Wert zwischen 8 und 10 gehalten wird, vorzugsweise zwischen 8,5 und 9,5.

13. Verfahren nach einem der Ansprüche 1 bis 8, dadurch gekennzeichnet, daß die Temperatur der Reaktionsmischung zwischen 60 °C und 95 °C einschließlich liegt.

14. Verfahren nach einem der Ansprüche 1 bis 8, dadurch gekennzeichnet, daß man die kolloidale Siliciumdioxid-Dispersion, die von 1 bis 150 g/l Siliciumdioxid enthält, in der Weise herstellt, daß man eine wäßrige Silicatlösung auf einen Wert zwischen 60 und 95 °C erwärmt und die Säure der wäßrigen Lösung zum Erhalt eines pH-Werts zusetzt, der zwischen 8,0 und 10,0 einschließlich liegt, vorzugsweise gleich 9,5 ist.

15. Verfahren nach einem der Ansprüche 1 bis 8, dadurch gekennzeichnet, daß die Konzentration der Silicatlösung, ausgedrückt als Siliciumdioxid, zwischen 40 und 250 g/l der kolloidalen Siliciumdioxid-Dispersion schwankt, ganz besonders zwischen 80 und 150 g/l.

16. Verfahren nach Anspruch 9, dadurch gekennzeichnet, daß die Konzentration des Elektrolyten von 0 bis 50 g/l der Dispersion schwankt.

17. Verfahren nach einem der Ansprüche 1 bis 8, dadurch gekennzeichnet, daß das Volumen, das durch die kolloidale Dispersion von Siliciumdioxid wiedergegeben wird, 10 bis 20 % des Volumens der erhaltenen Suspension darstellt, ganz besonders etwa 15 %.

18. Verfahren nach einem der Ansprüche 1 bis 8, dadurch gekennzeichnet, daß man nach der Trennung einen Waschschritt mit Wasser oder mit einer sauren Lösung durchführt.

## Claims (Claims for the following Contracting State(s): AT, BE, CH, DE, DK, FR, GB, GR, IT, LU, NL, SE, LI)

1. Precipitated silica having a BET specific surface of 20 to 300 m²/g, a CTAB specific surface between 10 and 200 m²/g, an oil sample (DBP) between 80 and 400 cm³/100 g, a pore volume of 1 to 10 cm³/g and a mean pore diameter between 10 and 50 nm.

2. Silica according to claim 1, characterized in that the BET specific surface is between 60 and 200 m2/g.

3. Silica according to claims 1 or 2, characterized in that the CTAB surface is between 60 and 200 m²/g.

4. Silica according to one of the claims 1 to 3, characterized in that its oil sample is between 100 and 350 cm³/100 g.

5. Silica according to one of the claims 1 to 3, characterized in that its pore volume is between 2 and 5 cm³/g.

6. Silica according to one of the claims 1 to 5, characterized in that the mean pore diameter is between 20 and 30 nm.

7. Silica according to one of the claims 1 to 5, characterized in that the mean diameter of the agglomerates varies between 0.5 and 20 and more particularly between 1 and 10 µm.

8. Silica according to one of the claims 1 to 7, characterized in that the pH is between 4 and 8 and more particularly between 5 and 7.

9. Process for the preparation of the silica described in one of the claims 1 to 8, characterized in that it consists of simultaneously adding a silicate and an acid to a colloidal silica dispersion, which leads to a silica suspension, followed by the lowering of the pH-value so that it is between 3 and 7, separating the silica and drying the latter.

10. Process according to claim 9, characterized in that it consists of additionally adding an electrolyte to the colloidal silica dispersion.

11. Process according to claim 9, characterized in that the electrolyte is an organic or mineral salt.

12. Process according to claim 11, characterized in that the electrolyte is an organic or mineral salt of an alkali metal, particularly of sodium or ammonium.

13. Process according to claim 9, characterized in that the two reagents are added simultaneously, so that the pH is kept constant between 8 and 10 and preferably between 8.5 and 9.5.

14. Process according to claim 9, characterized in that the temperature is between 60 and 95°C.

15. Process according to claim 9, characterized in that the colloidal silica dispersion containing 1 to 150 g/l of silica is prepared by heating an aqueous silicate solution between 60 and 95°C and adding the acid to said aqueous solution until a pH between 8 and 10 and preferably of 9.5 is obtained.

16. Process according to claim 9, characterized in that the concentration of the silicate solution expressed as silica varies between 40 and 250 g/l of colloidal silica dispersion and more particularly between 80 and 150 g/l.

17. Process according to claim 10, characterized in that the concentration of the electrolyte is between 0 and 50 g/l of dispersion.

18. Process according to claim 9, characterized in that the volume represented by the colloidal silica dispersion represents 10 to 20% of the volume of the final suspension obtained and is more particularly approximately 15%.

19. Process according to claim 9, characterized in that washing with water or an acid solution takes place after separation.

## Claims (Claims for the following Contracting State(s): ES)

1. Process for the preparation of a precipitated silica having a BET specific surface of 20 to 300 m²/g, a CTAB specific surface between 10 a rd 200 m²/g, an oil sample (DPB) between 80 and 400 cm³/100 g, a pore volume of 1 to 10 cm³/g and a mean pore diameter between 10 and 50 nm, characterized in that it consists of simultaneously adding a silicate and an acid to a colloidal silica dispersion, which leads to a silica suspension, lowering the pH in such a way that it is between 3 and 7, separating the silica and subjecting it to a drying process.

2. Process according to claim 1, characterized in that the BET specific surface is between 60 and 200 m²/g.

3. Process according to claims 1 or 2, characterized in that the CTAB specific surface is between 60 and 200 m²/g.

4. Process according to one of the claims 1 to 3, characterized in that its oil sample is between 100 and 350 cm³/g.

5. Process according to one of the claims 1 to 3, characterized in that its pore volume is between 2 and 5 cm³/g.

6. Process according to one of the claims 1 to 5, characterized in that the mean pore diameter is between 20 and 30 nm.

7. Process according to one of the claims 1 to 5, characterized in that he mean diameter of the agglomerates varies between 0.5 and 20 and more particularly between 1 and 10 µm.

8. Process according to one of the claims 1 to 7, characterized in that the pH is between 4 and 8 and more particularly between 5 and 7.

9. Process according to any one of the claims 1 to 8, characterized in that it consists of also adding an electrolyte to the colloidal silica dispersion.

10. Process according to any one of the claims 1 to 8, characterized in that the electrolyte is a mineral or organic salt.

11. Process according to claim 10, characterized in that the electrolyte is a mineral or organic salt of an alkali metal, particularly of sodium or ammonium.

12. Process according to any one of the claims 1 to 8, characterized in that the two reagents are added simultaneously, so that the pH is kept constant between 8 and 10 and preferably between 8.5 and 9.5.

13. Process according to any one of the claims 1 to 8, characterized in that the temperature of the reaction mixture is between 60 and 95°C.

14. Process according to any one of the claims 1 to 8, characterized in that the colloidal silica dispersion containing 1 to 150 g/l of silica is prepared by heating an aqueous silicate solution at between 60 and 95°C and adding the acid to said aqueous solution until a pH between 8 and 10 and preferably of 9.5 is obtained.

15. Process according to any one of the claims 1 to 8, characterized in that the concentration of the silicate solution expressed as silica varies between 40 and 250 g/l of colloidal silica dispersion and more particularly between 80 and 150 g/l.

16. Process according to claim 9, characterized in that the electrolyte concentration varies between 0 and 50 g/l of dispersion.

17. Process according to any one of the claims 1 to 8, characterized in that the volume represented by the colloidal silica dispersion represents 10 to 20% of the volume of the final suspension obtained and is more particularly approximately 15%.

18. Process according to any one of the claims 1 to 8, characterized in that washing with water or an acid solution takes place after separation.
